# EUROPEAN PATENT SPECIFICATION

(11) **EP 3 871 572 B1**
(45) Date of publication and mention of the grant of the patent: **14.10.2026**
(21) Application number: 19817823.8
(22) Date of filing: 22.10.2019
(51) Int. Cl.: A47J 31/46, A47J 31/52

(54) **SYSTEMS AND PROCESSES OF DISTRIBUTION OF EDIBLE PRODUCTS TO A CONTAINER REGULATED BY SAID CONTAINER**
SYSTEME UND VERFAHREN ZUR VERTEILUNG VON ESSBAREN PRODUKTEN AN EINEN VON DIESEM BEHÄLTER REGULIERTEN BEHÄLTER
SYSTÈMES ET PROCÉDÉS DE DISTRIBUTION DE PRODUITS COMESTIBLES POUR UN RÉCIPIENT RÉGULÉS PAR LEDIT RÉCIPIENT

(30) Priority: 23.10.2018 PT 2018115094
(43) Date of publication of application: 01.09.2021
(73) Proprietor: Novadelta - Comércio e Indústria de Cafés, Unipessoal Lda, 1950-041 Lisboa (PT)
(72) Inventor: NABEIRO, Rui Miguel, 7370-112 CAMPO MAIOR (PT); MEDINA MUNDT, Jesús, 1800-098 LISBOA (PT); DE FIGUEIREDO BRANCO, João André, 1885-091 MOSCAVIDE (PT); GONÇALVES MARTINS, Marco Filipe, 2480-093 PEDREIRAS PEDREIRAS (PT)
(74) Representative: Patentree
(86) International application number: PCT/PT2019/050036
(87) International publication number: WO 2020/085928

(56) References cited:
- WO-A1-2013/102130
- WO-A1-2017/200409
- US-A1- 2008 223 478

## Description

### Field of the invention

The present invention refers to the field of systems of distribution of edible products, in particular systems for distribution of beverages, presenting discharge means to the interior of a recipient of collection of edible product.

### Background of the invention

There are known systems of distribution of edible products, in particular of beverages, that provide a discharge of edible product along a direction contrary to the gravity force, and through the wall of a recipient of collection of edible product.

In particular in the case of aromatic beverages such as for example espresso type coffee, this beverage discharge is a relevant process with potential impact on the quality in the recipient. Among several aspects, it is important to ensure that the eventual liquid residues from the beverage discharge do not lead to a degradation of the beverage quality. In this particular, the prior art includes solutions relating to drainage of residues and of purge flows of beverage discharge dispositions.

The document EP 1991094 B1 discloses a drinking recipient adapted so that can be filled up from the base and presenting a sealable base wall for such purpose, whereby the beverage is injected under enough pressure to open a valve provided as flow regulation element of beverage discharge.

The document EP 2285687 B1 discloses a system that presents beverage discharge through the base region of a glass. The system discloses discharge means designed for evacuating liquid residues from the beverage discharge means. In particular, the system presents an opening on the placement surface of recipients that is configured in a bowl shape, whereby said opening is adapted so as to discharge eventual rests of beverage that might accumulate on said recipient placement surface.

The document EP 2120652 B1 discloses a system of the type of the present invention, whereby the base region of said drinking recipient can be retained by means of a screw thread on a placement disposition configured as extraction device so that collect a capsule containing an edible substance precursor of beverage, downstream of the fluid discharge and upstream of the base portion of the drinking recipient. Moreover, the base region of said placement disposition presents three transversal projections developing inward that, in correspondence with three transversal projections associated with a fluid discharge disposition and developing outwards, provide the placement and retention of the placement disposition on the fluid discharge disposition by means of rotation of said placement disposition around a respective central axis, thereby providing fluid communication connection of the fluid discharge upstream with the drinking recipient downstream.

The document EP 2928347 B1 discloses a system of the type of the present invention with discharge means designed for evacuating liquid residues from the beverage discharge means. In particular, said discharge means are provided as a junction element that connects an edge portion of a flexible pipe descending from the exit side of an extraction device, and a discharge tube ascending along the vertical, with a discharge tube that develops to an independent exit. The junction element is provided so that can be driven into movement by actuation means, between a non-operative position and an operative position.

The document WO 2017/200409 A1 further relates to a beverage preparation system of this type, whereby a beverage preparation machine presents at least one inlet opening designed for introducing portions of edible substance and arranged next to the beverage discharge arrangement, such that both are accessible in a common outer surface of the housing thereof. Moreover, this document further refers to the possibility of providing a sensor of recipient adapted so that can recognize the presence and correct retention of a beverage recipient on the beverage discharge disposition, but is limited to the apprehension of these two states and/ or positions of the beverage recipient.

### General description of the invention

The objective of the present invention is to provide a system adapted so that provides a simpler and more ergonomic interaction of a user with an apparatus of distribution of edible products, including regulation of the discharge of said edible product into a product recipient by means of manipulation thereof.

This objective is attained according to the present invention by means of a system of preparation of beverages according to claim 1, whereby preferred embodiments are described in the dependent claims.

In particular, the objective above is solved by means of a system whereby the apparatus presents interface means operatively associated with said recipient placement disposition, functionally connected to a control device of the operation of the apparatus, and adapted so that can apprehend at least one of position, state of operative retention and movement of said recipient on said recipient placement disposition, in particular rotation movement around a reference axis, and thereby provide regulation of discharge at least of edible product to said recipient.

The system of distribution of edible products can comprise at least two types of recipient and/or of apparatus for distribution of edible products, such as for example beverages.

The apparatus presents a recipient placement disposition that comprises an upwards-oriented product discharge, a placement surface and, preferentially, retention means adapted for the operative placement of a product recipient, including removable retention thereof, and that provides pressurized injection of discharge flow of edible product, for example a beverage, to the interior of the recipient along a direction opposite to the direction of the gravity force, through a base region of the recipient, for example a drinking recipient.

It is preferred when said reference axis corresponds at least approximately to the operative direction of placement of the recipient, to the central axis of the recipient and of the placement disposition, and to the discharge direction of edible product to the recipient.

The recipient and placement disposition can be adapted so that the recipient can only be placed in a single previously defined angular position, or in a plurality thereof, corresponding to a placement position. In particular, the recipient can only be retained in the placement disposition by means of a relative engagement movement including by means of at least one of:
- rotation of said recipient around itself, along at least a first rotation direction, preferentially at least along a rotation direction in clockwise direction,
- vertical translation of the recipient along at least a first direction, preferentially at least along a downwards direction,
- between said placement position and at least a first retention position,
thereby interacting with said selection means.

The system can provide the preparation of at least one type of beverage, for example espresso coffee and similar beverages, the apparatus in this case including a flow pressurization device, for example of the type hydraulic pump, and a product preparation device, for example an extraction device, adapted so that can collect an individual portion of edible substance, for example ground and roast coffee, optionally provided inside of a respective capsule.

The case of systems for preparation of beverages is considered in the forth ensuing description, and therefore, of a drinking recipient, such as for example a glass, cup, or other similar.

Another objective of the present invention is to provide a process of preparation of beverages including the use of a recipient and of a recipient placement disposition, whereby the beverage discharge flows through a base region of said recipient, so that the retention of the recipient is provided in ergonomic manner.

This objective is attained according to the present invention by means of a method of preparation of beverages according to claim 10, whereby preferred embodiments are described in the dependent claims.

### Description of the figures

The invention shall hereinafter be explained in greater detail based upon preferred embodiments and on the attached Figures.

The Figures show, in simplified schematic representations:
- Figure 1:: Side view, on the left side, and front view, on the right side, of main components of system of distribution of edible products of the type of the present invention and according to prior art;
- Figure 2:: diagram of a drinking recipient (1) operatively placed on a placement disposition (2) in fluid connection to an apparatus (3), of a system of the type of the present invention and according to prior art;
- Figure 3:: side cut of a first embodiment of a drinking recipient (1) operatively placed on a placement disposition (2) in a system according to the present invention;
- Figure 4:: side cut of a second embodiment of a drinking recipient (1) operatively placed on a placement disposition (2) in a system according to the present invention;
- Figure 5:: side cut of a third embodiment of a drinking recipient (1) operatively placed on a placement disposition (2) in a system according to the present invention;
- Figure 6:: top view of the placement disposition (2) according to the embodiment of Figure 5, in a first interaction position of interface means (7) according to the present invention;
- Figure 7:: top view of the placement disposition (2) according to the embodiment of Figure 5, in a second interaction position of interface means (7) according to the present invention;
- Figure 8:: top view of the placement disposition (2) according to the embodiment of Figure 5, in a third interaction position of interface means (7) according to the present invention;
- Figure 9:: side cut of a fourth embodiment of a drinking recipient (1) operatively placed on a placement disposition (2) in a system according to the present invention;
- Figure 10:: top view of the placement disposition (2) according to the embodiment of Figure 9, in a first interaction position of interface means (7) according to the present invention;
- Figure 11:: top view of the placement disposition (2) according to the embodiment of Figure 9, in a second interaction position of interface means (7) according to the present invention;
- Figure 12:: top view of the placement disposition (2) according to the embodiment of Figure 9, in a third interaction position of interface means (7) according to the present invention;
- Figure 13:: side cut of a fifth embodiment of a drinking recipient (1) operatively placed on a placement disposition (2) in a system according to the present invention;
- Figure 14:: top view of the placement disposition (2) according to the embodiment of Figure 13, in a first interaction position of interface means (7) according to the present invention;
- Figure 15:: top view of the placement disposition (2) according to the embodiment of Figure 13, in a second interaction position of interface means (7) according to the present invention;
- Figure 16:: top view of the placement disposition (2) according to the embodiment of Figure 13, in a third interaction position of interface means (7) according to the present invention;
- Figure 17:: side cut of a sixth embodiment of a drinking recipient (1) operatively placed on a placement disposition (2) in a system according to the present invention;
- Figure 18:: side cut of a seventh embodiment of a drinking recipient (1) operatively placed on a placement disposition (2) in a system according to the present invention;
- Figure 19:: Exploded view of a detailed embodiment of a drinking recipient (1) and a placement disposition (2) in a system according to the invention;
- Figure 20:: top and side cut views, and respective cuts of the embodiment according to Figure 19, in a first placement position of the drinking recipient (1);
- Figure 21:: views according to those of Figure 20, in a second placement position of the drinking recipient (1);
- Figure 22:: views according to those of Figure 20, in a third placement position of the drinking recipient (1);
- Figure 23:: top views of a placement disposition (2) in two actuation moments of output means (27);
- Figure 24:: top views of a placement disposition (2) in following two successive actuation moments of output means (27);
- Figure 25:: diagram of a first preferred embodiment of a process according to the present invention of regulation of operation of a system of distribution of edible products;
- Figure 26:: diagram of a first preferred embodiment of a process according to the present invention of regulation of operation of a system of distribution of edible products.

### Detailed description of preferred embodiments of the invention

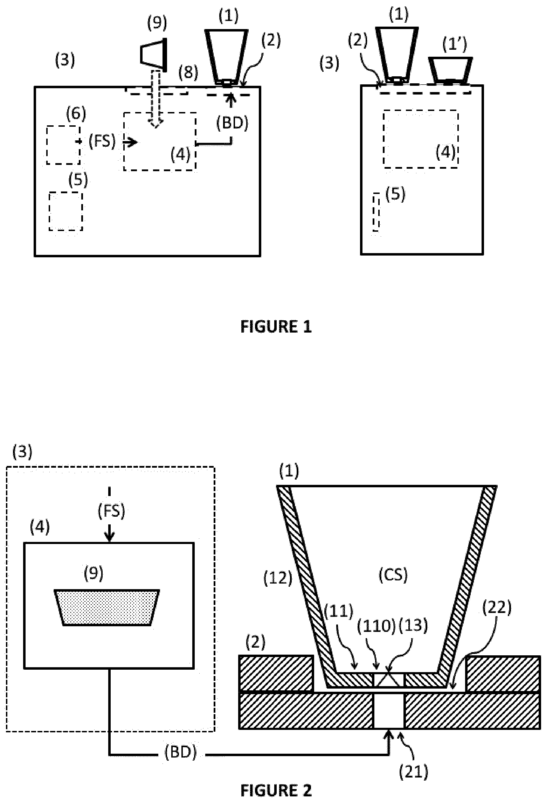

**Figure 1** represents side view, on the left-hand side, and front view, on the right-hand side, and **Figure 2** represents a functional diagram of a system for distribution of edible products of the type of the present invention, in this case a system of preparation of beverages based upon individual portions (9) of an edible substance.

Said system comprises at least one type of drinking recipient (1, 1'), such as for example a cup or a glass, that presents a base wall (11) comprising a passageway opening (110), a sidewall (12) configuring a drinking opening, whereby said drinking recipient (1) is adapted so that can be operatively retained on a placement disposition (2), that is, in stable and safe manner relative to the force exerted thereupon by the injection of pressurized flow of beverage discharge (BD) through the base region of the drinking recipient (1).

The drinking recipients (1, 1') can present engagement elements in the region of the base wall (11), whereby it is preferred when these engagement elements do not project outwards so that they do not result visible or perceptible on the sidewall (12).

The drinking recipients (1, 1') can present a flow regulation disposition (13), for example of the type single-way valve (symbolically represented by a triangle), retained on a passageway opening (110) of the base wall (11) and adapted so that only provides passageway to a pressurized flow of beverage discharge (BD), downstream, to said collection space (CS), along a direction opposite to the gravity force, if impinged with a flow pressure bigger than a previously defined flow pressure.

In the represented case, said system further comprises a beverage preparation apparatus (3), for example in the form of machine of preparation of espresso coffee and similar aromatic beverages, that presents at least one product preparation device (4), that in the represented case is a coffee extraction device, that can be provided as interior or exterior part of the casing of said apparatus (3) and that can be actuated between open and closed positions, and vice-versa, so that can collect an edible substance that is precursor of the beverage. The edible substance, for example roasted ground coffee beans, can be provided inside of an individual portion (9), for example in the form of a pod, a capsule, or other type of confinement thereof, adapted so that can be collected inside of the product preparation device (4).

Moreover, it is preferred when the beverage apparatus (3) includes a fluid reservoir (not represented), as well as a flow pressurization device (6) and a fluid heating device (not represented), so that can supply a flow (FS) at a temperature comprised between 60 and 100 °C and at a pressure comprised between 1 and 20 bar, preferentially more than 10 bar, so as to interact with said edible substance.

Said pressurized flow of beverage discharge (BD) is then conducted to an exit of said product preparation device (4) to a placement disposition (2) disposed downstream thereof. Said recipient placement disposition (2) includes at least one product discharge (21) and a recipient placement surface (22) associated with means adapted so that can retain a drinking recipient (1, 1'), preferentially by means of mechanical engagement with the base region (11) thereof, preferentially by means of engagement retention elements that develop inwards and in transversal manner with relation to the prevailing direction of beverage discharge.

The system can include a plurality of types of drinking recipients (1, 1') presenting different dimensions, in particular different dimensions of the respective base walls (11) and/or sidewalls (12), for example diameter, but adapted so as to engage in a same type of placement disposition (2), whereby at least one of said types of drinking recipients (1, 1') is not a disposable recipient.

Said apparatus (3) further comprises control means (5) adapted so that control the operation of the apparatus (3), in particular the start and end of the process of preparation and discharge of beverage to a drinking recipient (1), in case of being apprehended in a correct placement thereof on the placement disposition (2), as well as several other operation parameters of each beverage preparation cycle.

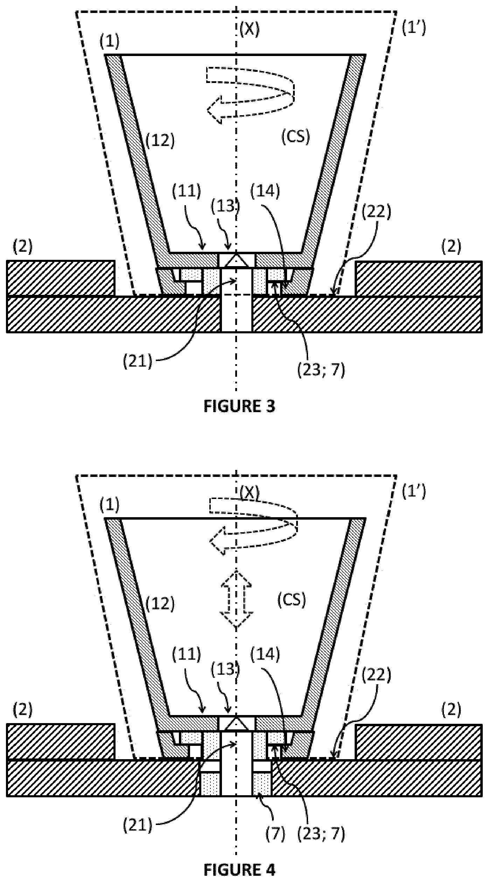

**Figure 3** represents a first embodiment of a system according to the present invention, in particular of a drinking recipient (1) operatively placed on a placement disposition (2) associated with a beverage preparation apparatus (3).

The drinking recipients (1, 1') present a base region configured so that can be placed upon a placement support (22), and further present engagement means (14) on the base region adapted so that can engage with retention means (23) associated with said placement disposition (2), thereby providing placement and operative placement thereon. It is herewith provided a simpler and more reliable retention of the recipient relative to the pressurized fluid discharge along the direction opposite the gravity, through the discharge element (21).

Moreover, according to an inventive aspect, said apparatus (3) further comprises interface means (7) associated with the placement disposition (2) and functionally connected to control means (5) of said apparatus (3), whereby said interface means (7) are adapted so that can apprehend at least one, preferentially several aspects at least of a rotation movement of the drinking recipient (1, 1') around itself, around a reference central axis (X) thereof and operatively placed on said placement disposition (2).

In particular, in the case of the represented embodiment, said interface means (7) are provided associated with said retention means (23), and adapted so that can apprehend the direction of rotation and the angular extension of the rotation movement from a reference position of said drinking recipient (1, 1'), for example an initial correct placement position (A) on the placement disposition (2).

In the case of the embodiment represented in **Figure 4****,** besides said interface means (7) adapted so that can apprehend a rotation movement, there are further provided second interface means (7) associated with the product discharge (21) and adapted so that, besides the aspects of a rotation movement of the drinking recipient (1, 1') around itself, they can also apprehend a touch or pressure exerted thereupon as a result of a vertical movement of the drinking recipient (1, 1') downwards, along the direction of the reference central axis (X).

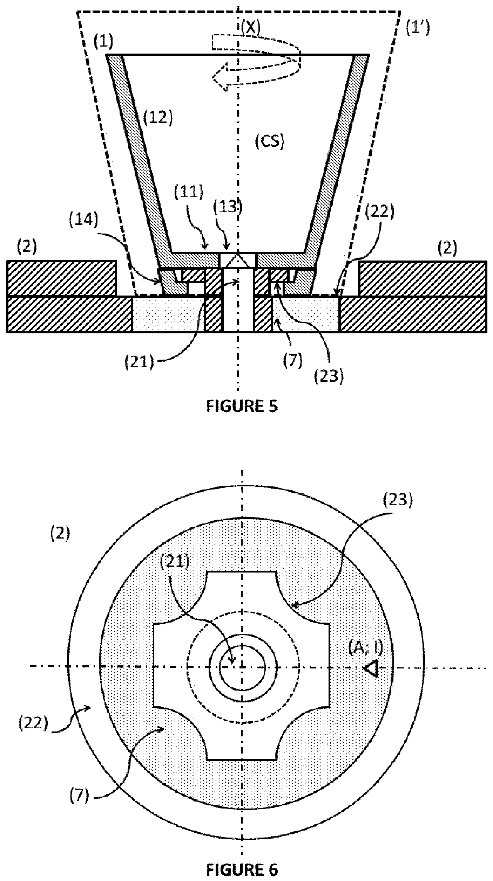

**Figure 5** represents a third embodiment whereby said interface means (7) are associated with said placement surface (22) and adapted so that can be dragged by means of material engagement by the drinking recipient (1) in case the latter is operatively placed on said placement surface (22), along at least one rotation direction thereof, thereby providing an input to the control means (5) of said apparatus (3).

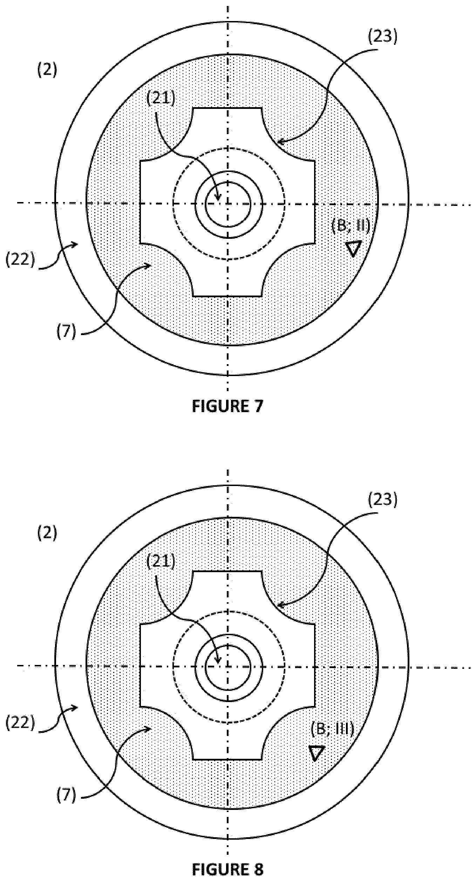

As represented on **Figures 6** to **8****,** said interface means (7) can be actuated by the rotation movement of the drinking recipient (1) operatively placed on said placement disposition (2) between a first reference angular position (I), corresponding for example to a position of correct placement (A), and at least a second (II), preferentially further at least a third reference angular position (III), corresponding to several retention positions (B) provided along an alignment of manipulation on the placement disposition (2).

In particular, the engagement means (14) and retention means (23) are adapted so that the drinking recipient (1, 1') can be operatively placed on the placement disposition (2) in only up to four previously defined angular positions corresponding to a correct placement position (A; I), whereby said interface means (7) can be rotated by means of dragging thereof by said recipient (1, 1') into at least one retention position (B; II), preferentially further to another position (B; III).

It is preferred when said interface means (7) are adapted so that can apprehend in continuous manner the extension of a rotation movement of up to 90 degrees, preferentially up to 45°, and can provide an input that corresponds to the effective extension of rotation realized by the drinking recipient (1, 1') corresponding to the selection of a given quantity of edible product to be discharged into it.

Alternatively, said interface means (7) can be adapted so that apprehend at least one previously defined angular position of said drinking recipient (1, 1'), and previously associated with a given discharge parameter, or value of discharge parameter of edible product to the drinking recipient (1, 1').

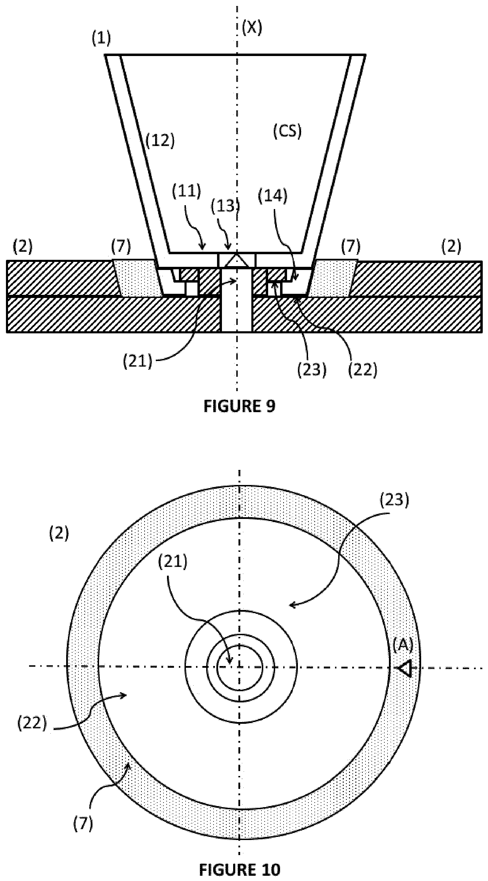

**Figure 9** represents a fourth embodiment whereby said interface means (7) are associated with a sidewall that confines said placement surface (22) and adapted so that can be pulled by material engagement by the drinking recipient (1) in case the latter is operatively placed on said placement surface (22), along at least one rotation direction thereof, thereby providing an input to the control means (5) of said apparatus (3).

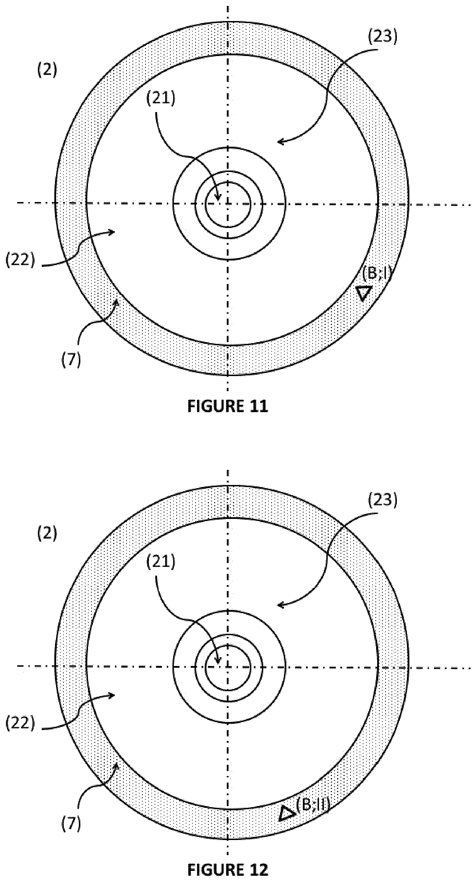

In the case of preferred embodiment, represented on **Figures 10** to **12****,** the edible product is discharged by the apparatus (3) through the injection device (21) from the moment when the drinking recipient (1, 1') is rotated beyond a second reference position (II), and as long as it remains thereon or beyond thereof. The discharge of edible product is interrupted when the drinking recipient (1, 1') is rotated back, beyond said second reference position (II) in the direction of the first reference position (I).

In the case of another preferred embodiment, the temperature of the edible product can be regulated, within an interval of previously defined temperature values, in proportional manner to the extension of rotation of the drinking recipient (1, 1') beyond said second reference position (II) that corresponds, for example, to 88 degrees centigrade, and up to said third reference position (III) that corresponds, for example, to 94 degrees centigrade.

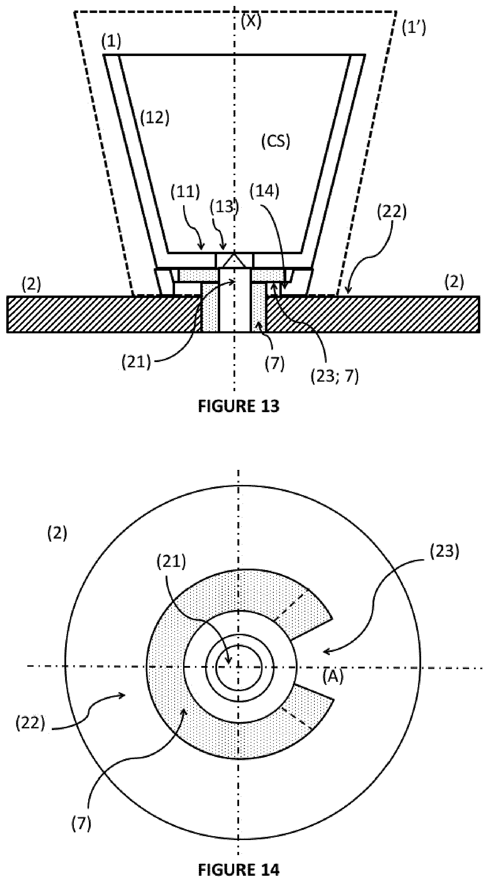

**Figure 13** represents a fifth embodiment whereby said interface means (7) are associated with said retention means (23) and adapted so that can be actuated by means of mechanical engagement with the engagement means (14) of said drinking recipient (1) in case the latter is operatively placed on said placement surface (22), along at least one direction rotation thereof, thereby providing an input to the control means (5) of said apparatus (3).

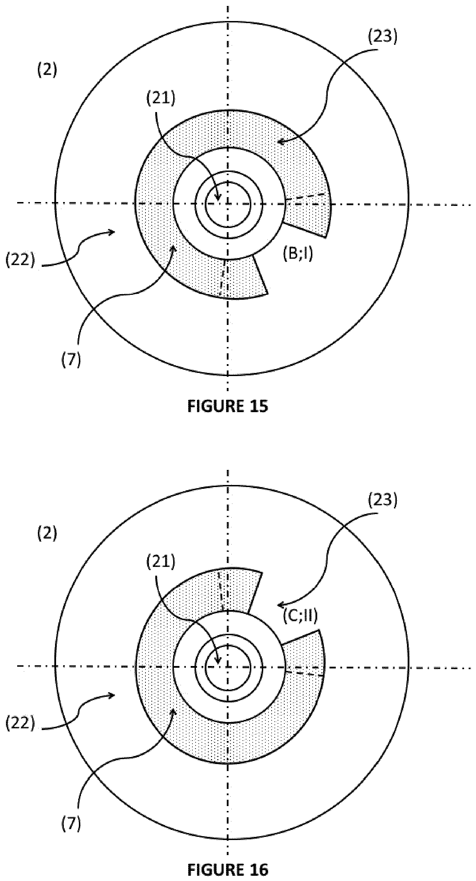

As represented on **Figures 14** to **16****,** the rotation movement can be realized in the clockwise direction- corresponding for example to the regulation of discharge of edible product, such as espresso coffee - and in the opposite direction, in this case for example corresponding to the regulation of discharge of a flow, for example of water, for cleaning of the recipient placement disposition (2), or for pre-heating of the drinking recipient (1, 1').

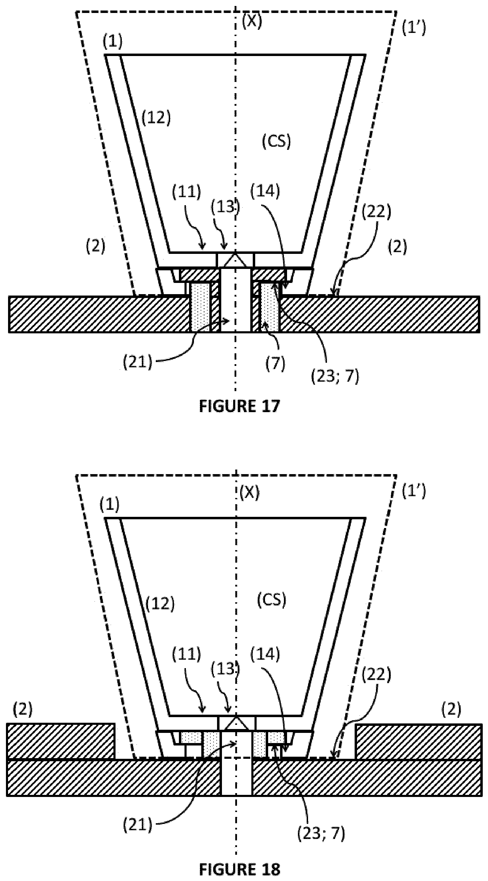

**Figures 17** and **18** represent embodiments whereby said interface means (7) can also apprehend at least one of presence of the drinking recipient (1, 1'), for example by direct contact or by electromagnetic interaction, a pressuring action, a translation movement along a vertical direction between an initial position and at least a second position.

The placement disposition (2) can present a mechanic device (not represented), for example of mechanical switch type or mechanical key in operational data connection with other components, and adapted so that only provides retention or possibility of rotation, when the drinking recipient (1, 1') is correctly placed on said placement disposition (2).

The apprehension by the interface means (7) of at least one of the aforementioned aspects, can be used as input for regulation of the actuation of motorized devices of the apparatus (3), such as for example actuation of opening and closing of at least one of: the introduction passageway (8) of portion of edible substance, at least one of two parts of extraction device (4), or other elements.

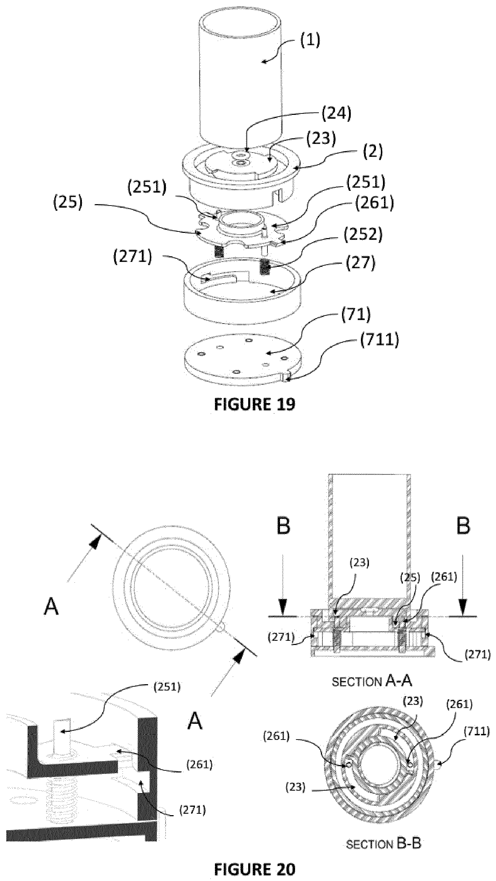

**Figures 19** to **22** show a detailed embodiment of the present invention.

A drinking recipient (1) can be placed on a given angular position on the placement disposition (2) so that the base region thereof engages with retention means (23) and seats on a rotation support (26). In this position, the drinking recipient (1) compresses a sealing element (24) of o-ring type, provided in the discharge region of beverage discharge. Still in this position, the drinking recipient (1) actuates an access element (25) that in this case is provided as an actionable pin (251) and elastic springs (252) that is displaced downward when actuated by the drinking recipient (1). Said access element (25) is adapted so that only provides rotation of said rotation support (26) in case of actuation thereof, that is, in case of a correct placement thereof on said placement disposition (2).

Said rotation support (26) is disposed underneath said retention means (23) so that can be rotated around a central axis (X) thereof, actuated by means of being contact dragged by the drinking recipient (1). Said rotation element (26) presents engagement elements (261) adapted so that engage in movable manner in grooves (271) that develop in a respective angular extension in wall of a collection casing (27) adapted so that provides rotation of said rotation support (26) along said grooves (271).

Said collection casing (27) is provided in connection with interface means (7) provided in the form of a second rotation element (71) that presents an angular indication element (711). This angular indication element (71) can be a magnet with a Hall effect sensor ("encoder"), adapted so that actuates a mechanical or magnetic switch, a variable electric resistance (not represented), or similar, according to the extension of its angular extension.

**Figures 20** to **22** represent three successive positions of a drinking recipient (1) placed on the placement disposition (2) and manipulated so as to regulate a parameter of beverage discharge, for example the quantity of beverage.

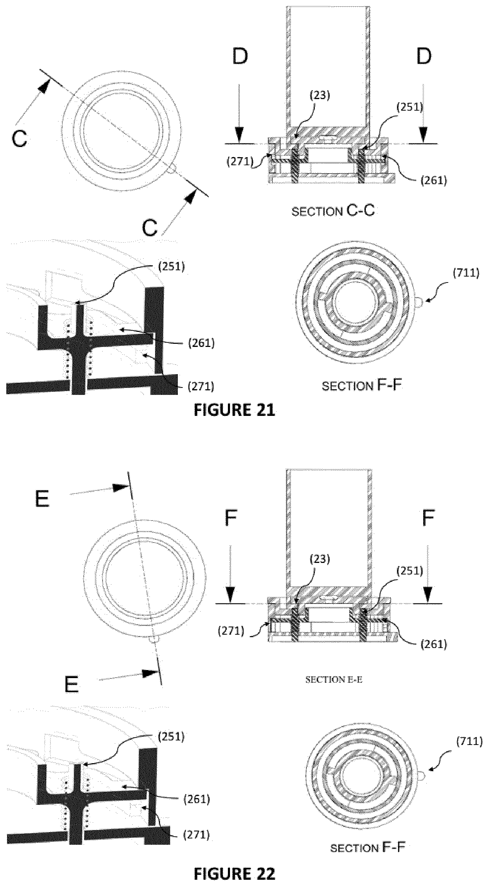

On a first position (Figure 20), the drinking recipient (1) is at an initial placement position on the rotation support (25), whereas as a second position (Figure 21) is rotated around itself relative to the initial placement position, to a retention position where it is retained by retention means (23) (Figure 21). In particular, in this retention position, the base region of the drinking recipient (1) pressures the actionable pin (251) elastically downwards, so that the drinking recipient (1) can be additionally rotated.

A user can rotate the drinking recipient (1), and therewith also the angular indication element (711), to one of a plurality of possible angular positions (Figure 22), thereby providing a signal to control means (5) relating to a quantity of given operation parameter, for example the quantity of beverage to be discharged.

It is preferred when the user further has the possibility of varying the extension of rotation of the drinking recipient (1) after the start of the preparation cycle, and this variation is still considered after the start of the cycle and before conclusion thereof. For example, the beverage discharge can be interrupted before reaching the selected volume if, after the start of the extraction and discharge, there is detected a reduction of the angular position of said angular indication element (711). Likewise, a user can obtain a bigger volume of beverage than the corresponding to the initial selection if, before concluded the extraction and discharge, there is detected an increase of the relative angular position of said angular indication element (711).

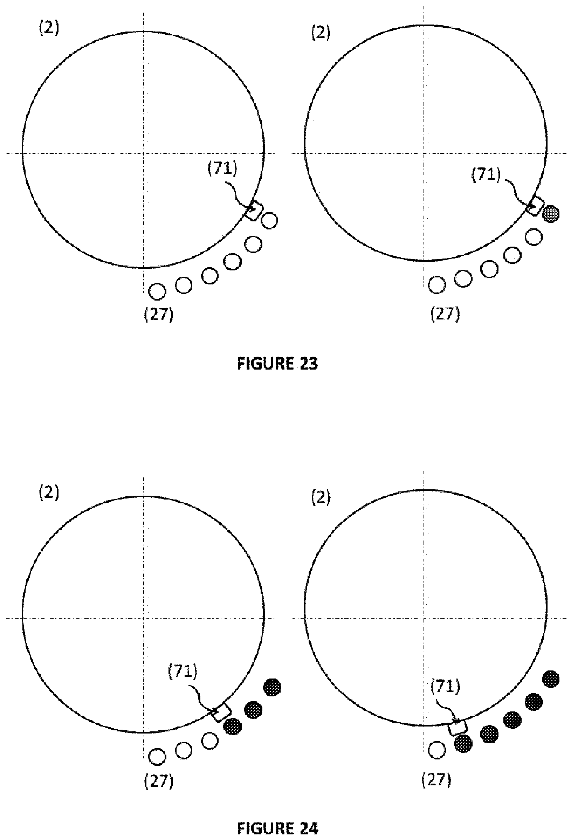

**Figures 23** and **24** represent an embodiment of output means (27) associated with said placement disposition (2), in particular in a concentric alignment with the position of the drinking recipient (1), and actuated according to the actuation of said interface means (7) so that display an indication of the quantity selected by the user.

In the case of this embodiment, said output means (27) are provided as a succession of light dots arranged in the proximity and along the angular region associated with the extension of possible rotation of the drinking recipient (1) on the rotation support (25). In particular, the output means (27) are adapted so that light up according to the rotation of a drinking recipient (1) on said rotation support (25), thereby providing the user with a relative indication of the quantity of beverage selected by the user for discharge.

It is preferred when, after a previously defined period of time without said interface means (7) detecting any movement, there is provided a variation of the actuation of the output means (27), for example a variation of at least one of luminous intensity, colour, and lighting frequency, so as to communicate the start of the beverage preparation cycle.

Alternatively, or in combination with a luminous visual indication, the drinking recipient (1) can present a handle provided in a position with relation to respective engagement means (14) such that provide the user with an indication of the quantity selected with relation to at least one reference marking, for example associated with a maximum volume, arranged on the placement disposition (2).

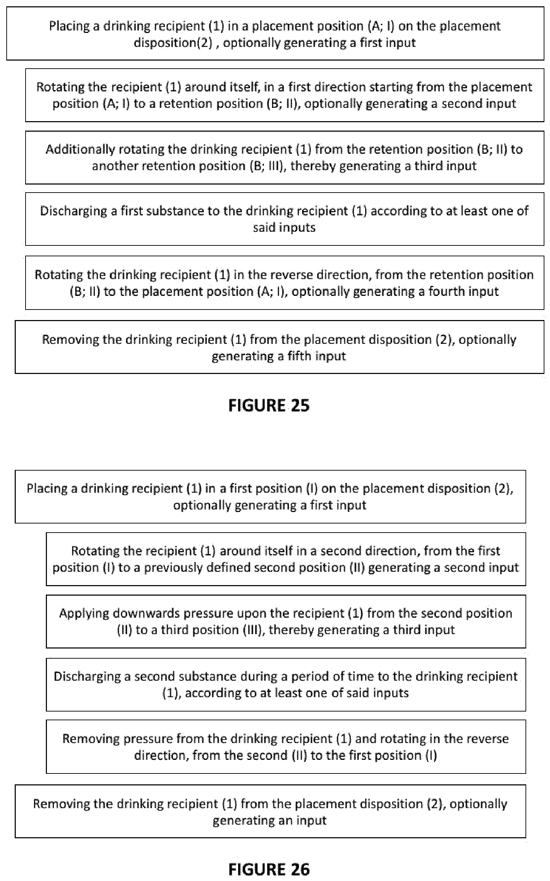

**Figures 25** and **26** represent two preferred embodiments of a process of regulation according to the present invention.

The placement of the drinking recipient (1) on the placement disposition (2), on a first position, notably on a position of correct placement (A) thereon, corresponding to a first reference position (I), can generate a first input to the control means (5).

The rotation of the drinking recipient (1) around itself, for example in the clockwise direction, to a second reference position (II), corresponding for example to a retention position (B), can generate a second input. This second input can, for example, unblock the operation of the flow pressurization device (6).

The additional rotation of the drinking recipient (1) around itself, until a third retention position (III), can generate another input that is used for starting the process of preparation of edible product and respective discharge. Moreover, the relative extension of the movement carried out between the second (II) and third (III) reference position, notably both being retention positions (B), can be used as input for regulating the quantity of product to be discharged.

Said third reference position (III) can be one of a plurality of previously defined possible retention positions (B), or can correspond to a position comprised in a continuous extension of successive regulation positions, along which said drinking recipient (1) is operatively retained on the placement disposition (2).

It is preferred when the rotation in an opposite direction, generates different inputs, for example associated with the selection of another type of operation, or type of substance or product to be discharged to the drinking recipient (1). A user can thus place a drinking recipient (1) on the placement disposition (2), rotate in one direction (C) so as to discharge a pre-heating flow, or a flow of milk. The user can then rotate the drinking recipient (1) back to the initial position (A; I), and in the opposite direction beyond the retention position (B; II) so as to obtain discharge of a given quantity of espresso coffee, for example proportionally to the extension of the rotation movement beyond the rotation movement (B; II).

Besides the rotation movement, also said interface means (7) can be adapted so as to generate inputs for regulation of the operation of the apparatus (3), based upon the placement of the drinking recipient (1) at an initial position (A; I), and removal thereof.

It is preferred when the application of pressure upon said drinking recipient (1) downward, also generates an input that can be used by the control means (5) for regulation of a given operation parameter of the apparatus (3).

## Claims

1. System for distribution of edible products and that includes:
- a recipient (1) adapted so that can be operatively placed on a placement disposition (2) along a reference axis (X) of said placement disposition (2), where the recipient (1) can collect an edible product,
- an apparatus (3) for distribution of edible product, presenting said placement disposition (2),
said placement disposition (2) presenting a product discharge (21) adapted so that discharges the edible product to the recipient (1) in case the recipient (1) is operatively placed on the placement disposition (2),
said apparatus (3) comprising control means (5) adapted so that control the operation of the apparatus (3), including operation parameters, data communication and display of information associated with operation cycles thereof,
**characterized in that**
said apparatus (3) presenting interface means (7) adapted sc that apprehend at least one aspect of a rotation movement of the recipient (1) operatively placed on said placement disposition (2), and provide a respective input to said control means (5), wherein
said interface means (7) are operatively associated with said placement disposition (2) so that said interface means (7) can apprehend at least one of several aspects of rotation movement of the recipient (1) around itself by the user, around a vertical axis thereof, operatively placed on the placement disposition (2), including at least direction and extension of said rotation movement from a first position (I) to at least a second position (II) along at least one handling alignment, and **in that** said interface means (7) are adapted to provide input to the control means (5) based upon the apprehension of a respective aspect of rotation movement of the recipient (1) around itself and for regulation of at least one respective operation parameter of the apparatus (3).

2. System according to claim 1, **characterized**
**in that** said interface means (7) are operatively associated with said placement disposition (2) so that can apprehend at least one of:
- correct placement of the recipient (1) by the user on the placement disposition (2), in particular in at least one placement position (A),
- correct retention of the recipient (1) by the user on the placement disposition (2), in at least one position of retention condition (B; C), and
**in that** said interface means (7) are adapted so that can provide at least two different inputs to the control means (5) based upon the apprehension of a respective aspect of rotation movement of the recipient (1) around itself and for regulation of at least one respective operation parameter of the apparatus (3), preferentially including at least regulation of an operation cycle, such as for example the discharge of edible product to the recipient (1).

3. System according to claim 1 or 2, **characterized**
**in that** said interface means (7) are adapted so that can apprehend at least one aspect of rotation movement of the recipient (1) operatively placed on the placement disposition (2), including by means of a remote manner, by means of a proximal manner with relation to the recipient (1) or by means of direct contact therewith, and
**in that** said interface means (7) are adapted so that can apprehend at least one of:
- type of movement, including at least one rotation movement of the recipient (1) around itself, preferentially also a vertical movement of the recipient (1) along the reference axis (X),
- direction of movement, including at least of rotation in the clockwise direction, preferentially also in the anticlockwise direction, and
- at least one of: operative presence and retention of the recipient (1) on the placement disposition (2);
- extension of movement of the rotation movement by the recipient (1) around itself on the placement disposition (2) between at least one of:
- a placement position (A) and a retention position (B; C) of the recipient (1);
- a first (I) and a second position (II), preferentially a plurality of relative angular positions of the recipient (1) in retention condition (B; C).

4. System according to claims 1 to 3, **characterized**
**in that** said interface means (7) are adapted so that can be actuated by the recipient (1) operatively placed on the placement disposition (2), including jointly moved by a movement of the recipient (1), including by means of at least one of: material engagement between the materials in direct contact, magnetic engagement, electromagnetic engagement, mechanical engagement by pressurized fitting of male-female, bayonet, screw type, or similar, so that at least one rotation movement of the recipient (1) around itself, preferentially also a vertical movement along a reference axis (X), leads to a corresponding movement of the interface means (7).

5. System according to anyone of claims 1 to 4, **characterized**
**in that** said interface means (7) are adapted so that can be engaged by the recipient (1) operatively placed on the placement disposition (2), preferentially placed in a previously defined position so that can be operatively retained on the placement disposition (2), and moved from at least one of: a first placement position and a second position of the recipient (1) where it is operatively retained on said placement disposition (2), and that can be disengaged in case the recipient (1) is moved from said positions in a reverse movement.

6. System according to anyone of claims 1 to 5, **characterized**
**in that** said interface means (7) comprise a rotation part associated with the base region of the recipient (1, 1') so that can be jointly moved by a rotation movement thereof, whereby said rotation part is provided in functional connection, for example by means of an engagement mechanism, with a part of electrical variation by rotation thereof, for example of potentiometer type, so that the extension of the rotation movement of said recipient (1, 1') is converted in an electrical signal.

7. System according to anyone of claims 1 to 6, **characterized**
**in that** said interface means (7) are provided in operative connection with said control means (5) so that provide input to at least one of:
- selection of the type of cycle of substance discharge to the recipient (1);
- actuation of start of cycle of preparation of edible product;
- regulation of the quantity of edible product to be discharged through the placement disposition (2);
- start and end of the discharge of edible product through the placement disposition (2),
- actuation of at least an opening movement, optionally further of a closing movement of a supply passage of portion (8) of edible substance, and product preparation device (4) operatively associated therewith,
and preferentially information display to the user of the state associated with at least one of said selection interactions.

8. System according to anyone of claims 1 to 7, **characterized**
**in that** said interface means (7) are provided in functional connection with the control means (5) and adapted so that provide selection of type or characteristics of edible product and/or discharge thereof, according to at least one of:
- type of movement, including of vertical translation or of rotation relative to a reference axis (X) of the placement disposition (2);
- direction of movement, including for example vertical downwards or upwards, rotation in the clockwise direction or opposite, and
**in that** said interface means (7) are adapted so that provide input for regulation of the discharge quantity according to at least one of:
- the extension of movement of engagement of the recipient (1) on said placement disposition (2), including at least a first position (I), preferentially also a second position (II) in retention condition (B; C);
- the period of time during which the recipient (1) is operatively engaged in the placed disposition (2), at least in a extension of engagement movement that corresponds to a first position (I) or to a second position (II) in retention condition (B; C).

9. System according to any one of claims 1 to 8, **characterized**
**in that** said apparatus (3) presents output means (27) preferentially associated with said placement disposition (2) and adapted so that can display to the user an indication of variation generated by the rotation of the recipient (1) around itself, said output means (27) being for example in the form of a plurality of light dots provided in a similar alignment and operatively associated to the extension of rotation of the recipient (1) around itself on the placement disposition (2).

10. Process for operation of a system according to any one of previous claims 1 to 9, said process including a selection interaction by a user of the apparatus (3) so as to regulate an operation cycle thereof,
**characterized**
**in that** said selection interaction includes the actuation by the user of at least one rotation movement of the recipient (1) around itself when operatively placed on the placement disposition (2) of the apparatus (3), said actuation being carried out before start of each operation cycle, and the realization of the operation cycle not requiring the actuation by the user of other interface of use of the apparatus (3).

11. Process according to claim 10, **characterized**
**in that** said selection interaction is apprehended by control means (5) so that determine the selection of at least one of:
- type of operation of the apparatus (3), such as for example preparation of edible product or fluid circulation for cleaning of the circuit of preparation of product,
- type of edible product, such as for example coffee, or water, or milk, or other,
and/or
a quantity associated to respective discharge of edible product to a recipient (1), including at least one of:
- relative quantity with relation to at least one minimum and/or maximum reference;
- duration of the product discharge, and
- volume of product discharge,
and
**in that** said rotation movement of the recipient (1) on the placement disposition (2) is associated by the control means (5) to at least one of: start, stop, duration and volume of discharge of edible product.

12. Process according to claims 10 or 11, **characterized**
**in that** said selection interaction comprises the following steps:
- placing a recipient (1) in an initial placement position on a placement disposition (2);
- moving the recipient (1) in a first movement, for example of rotation, in a first direction, for example in the clockwise direction, to a position of operative retention on said placement disposition (2),
- moving the recipient (1) additionally in the first direction and in a given extension comprises between the first and second retention position that corresponds to a maximum extension of movement of the recipient (1) beyond the first retention position;
- providing a first operation input to the control means (5) after the recipient (1) is at a given first operating position, corresponding to the position to where the recipient (1) has been moved to by the user in the movement extension interval defined by said first and second retention positions, during a previously defined period of time;
- initiating flow circulation, for example cycle of beverage preparation, according to said first operation position, in particular including an operation value related with the extension of movement along the first direction between said first retention position and first operation position;
- carrying out the discharge of a first edible product, for example discharge of beverage resulting from the extraction of a portion (9) of edible substance, by the beverage discharge means on the placement disposition (2) to the recipient (1) through the base thereof,
- optionally, additionally moving the recipient (1) during said discharge of edible substance and thereby provide a second operation input, including for example increasing and/or reducing the extension of movement relative to the first operating position, whereby the second operation input corresponds to the difference of operation value, for example discharge volume, to the operation value associated with said first operation input;
- concluding the discharge of edible product after at least one of:
- being attained the operation value associated with the previous of said first and second operation inputs provided to the control means (5);
- the recipient (1) being moved to the first retention position still during the discharge of edible product;
- moving the recipient (1) in a direction reverse to the first direction, back to the first retention position and beyond thereof, in the second direction, thereby releasing the recipient (1) from retention in the placement disposition (2);
- removing the recipient (1) of placement disposition (2).

13. Process according to claims 10 to 12, **characterized**
**in that** said selection interaction further comprises at least one of the steps:
- moving the recipient (1) in a second movement in operative retention on the placement disposition (2),
- initiating and concluding the discharge of a second edible substance to the recipient (1),
and
- moving the recipient (1) in a third movement,
- carrying out the discharge of at least one of: a heating flow of the recipient (1) and a purge flow at least of the placement disposition (2),
- removing the recipient (1) from the placement disposition (2).

14. Process according to claims 10 to 13, **characterized**
**in that** said selection interaction further includes:
- moving the recipient (1) in a second movement in operative retention on the placement disposition (2), and
- initiating and concluding the discharge of a second edible product to the recipient (1),
- removing the recipient (1).

15. Process according to claims 10 to 14, **characterized**
**in that** said selection interaction further includes the selection of at least one of:
- type of operation of the apparatus (3);
- parameter of operation of preparation of edible product;
- type of edible product;
- quantity of edible product to be discharged;
- other discharge parameter of edible product to be discharged, such as for example discharge temperature and discharge pressure;
whereby to each one of the available selections corresponds at least one of: type of movement, extension of movement of the recipient (1) on the placement disposition (2).

16. Process according to claims 10 to 15, **characterized**
**in that** said selection interaction further includes at least one of the following steps:
- passing the apparatus (3) from a "standby" state to a operation-ready state;
- actuation of opening and closing of an introduction passage (8) of portion of edible substance;
- introduction of a portion (9) of edible substance through said introduction passage (8) of portion;
- actuation of opening and closing of the extraction device (4);
whereby at least one of said steps is preferentially automatically initiated after the placement a recipient (1) in operative retention on the placement disposition (2).

## Patentansprüche

1. System zur Verteilung essbarer Produkte, umfassend:
- einen Behälter (1), der dazu ausgelegt ist, in einer Aufnahmeanordnung (2) entlang einer Bezugsachse (X) der genannten Aufnahmeanordnung (2) funktionsgerecht angeordnet zu werden, wobei der Behälter (1) dazu ausgelegt ist, ein essbares Produkt aufzunehmen,
- eine Vorrichtung (3) zur Verteilung essbarer Produkte, umfassend die genannte Aufnahmeanordnung (2),
wobei die genannte Aufnahmeanordnung (2) eine Produktausgabe (21) aufweist, die zur Ausgabe des essbaren Produkts in den Behälter (1) ausgelegt ist, wenn der Behälter (1) funktionsgerecht auf der Aufnahmeanordnung (2) angeordnet ist,
wobei die genannte Vorrichtung (3) Steuermittel (5) zur Steuerung des Betriebs der Vorrichtung (3) umfasst, einschließlich von Betriebsparametern, Datenkommunikation und Anzeige der den Betriebszyklen zugeordneten Informationen,
**dadurch gekennzeichnet, dass**
die genannte Vorrichtung (3) Schnittstellenmittel (7) zur Erfassung mindestens eines Aspekts einer Drehbewegung des auf der genannten Aufnahmeanordnung (2) funktionsgerecht angeordneten Behälters (1) sowie zur Bereitstellung eines entsprechenden Eingangssignals an die genannten Steuermittel (5) aufweist,
wobei die genannten Schnittstellenmittel (7) funktionsmäßig mit der genannten Aufnahmeanordnung (2) verbunden sind, damit die genannten Schnittstellenmittel (7) mindestens einen von mehreren Aspekten einer durch einen Benutzer bewirkten Drehbewegung des Behälters (1) um seine eigene Achse, insbesondere vertikale Achse bei der Anordnung auf der Aufnahmeanordnung (2) erfassen, einschließlich mindestens der Richtung und des Ausmaßes der genannten Drehbewegung von einer ersten Position (I) zu mindestens einer zweiten Position (II) entlang mindestens einer Bewegungsrichtung, und wobei die genannten Schnittstellenmittel (7) dazu ausgelegt sind, den Steuermitteln (5) in Abhängigkeit der Erfassung eines entsprechenden Aspekts der Drehbewegung des Behälters (1) um seine eigene Achse Eingangssignale bereitzustellen, um mindestens einen entsprechenden Betriebsparameter der Vorrichtung (3) zu regeln.

2. System nach Anspruch 1, **dadurch gekennzeichnet, dass**
die genannten Schnittstellenmittel (7) funktionsmäßig mit der genannten Aufnahmeanordnung (2) verbunden sind, sodass sie mindestens einen der folgenden Vorgänge erfassen können:
- korrekte Platzierung des Behälters (1) durch den Benutzer auf der Aufnahmeanordnung (2), insbesondere in mindestens einer Aufnahmeposition (A),
- korrektes Halten des Behälters (1) durch den Benutzer auf der Aufnahmeanordnung (2) in mindestens einer Halteposition (B; C) und
wobei die genannten Schnittstellenmittel (7) dazu ausgelegt sind, den Steuermitteln (5) in Abhängigkeit der Erfassung eines entsprechenden Aspekts der Drehbewegung des Behälters (1) um seine eigene Achse mindestens zwei unterschiedliche Eingangssignale bereitzustellen, um mindestens einen entsprechenden Betriebsparameter der Vorrichtung (3) zu regeln, bevorzugt umfassend mindestens die Steuerung eines Betriebszyklus, insbesondere der Abgabe essbarer Produkte in den Behälter (1).

3. System nach Anspruch 1 oder 2, **dadurch gekennzeichnet, dass**
die genannten Schnittstellenmittel (7) dazu ausgelegt sind, mindestens einen Aspekt der Drehbewegung des auf der Aufnahmeanordnung (2) funktionsgerecht angeordneten Behälters (1) zu erfassen, einschließlich mittels eines Fernverfahrens, eines proximalen Verfahrens in Bezug auf den Behälter (1) sowie mittels direkten Kontakts mit diesem, und wobei die genannten Schnittstellenmittel (7) dazu ausgelegt sind, mindestens einen der folgenden Vorgänge zu erfassen:
- die Bewegungsart, umfassend mindestens eine Drehbewegung des Behälters (1) um seine eigene Achse, bevorzugt zusätzlich eine vertikale Bewegung des Behälters (1) entlang der Bezugsachse (X),
- die Bewegungsrichtung, umfassend zumindest eine Drehung im Uhrzeigersinn, bevorzugt auch gegen den Uhrzeigersinn, und
- mindestens eines der folgenden Kriterien: die operative Präsenz und der Verbleib des Behälters (1) in der Aufnahmeanordnung (2);
- das Ausmaß der Drehbewegung des Behälters (1) um seine eigene Achse auf der Aufnahmeanordnung (2) zwischen mindestens einem der folgenden Punkte:
- eine Aufnahmeposition (A) und eine Halteposition (B; C) des Behälters (1);
- eine erste Position (I) und eine zweite Position (II), bevorzugt eine Vielzahl relativer Winkelpositionen des Behälters (1) im Haltezustand (B; C).

4. System nach den Ansprüchen 1 bis 3, **dadurch gekennzeichnet, dass**
die genannten Schnittstellenmittel (7) dazu ausgelegt sind, durch den auf der Aufnahmeanordnung (2) funktionsgerecht platzierten Behälter (1) betätigt zu werden, wobei sie gemeinsam mit einer Bewegung des Behälters (1) bewegt werden, einschließlich mindesten eines der folgenden Vorgänge: Materialeingriff zwischen den in direktem Kontakt stehenden Materialien, magnetischer Eingriff, elektromagnetischer Eingriff, mechanischer Eingriff durch kraftschlüssig ineinandergreifende Verbindungselemente, Bajonett-, Schraub- oder ähnliche Verbindungen, sodass zumindest eine Drehbewegung des Behälters (1) um seine eigene Achse, bevorzugt auch eine vertikale Bewegung entlang einer Referenzachse (X) zu einer entsprechenden Bewegung der Schnittstellenmittel (7) führt.

5. System nach einem der Ansprüche 1 bis 4, **dadurch gekennzeichnet, dass**
die genannten Schnittstellenmittel (7) dazu ausgelegt sind, dass sie von dem auf der Aufnahmeanordnung (2) funktionsgerecht platzierten Behälter (1) betätigt werden, bevorzugt in einer zuvor definierten Position, sodass dieser auf der Aufnahmeanordnung (2) funktionsgerecht gehalten und aus mindestens einer der folgenden Positionen bewegt werden kann: einer ersten Aufnahmeposition und einer zweiten Position des Behälters (1), in der dieser auf der genannten Aufnahmeanordnung (2) funktionsgerecht gehalten wird, und die gelöst werden können, wenn der Behälter (1) in einer Rückwärtsbewegung aus den genannten Positionen bewegt wird.

6. System nach einem der Ansprüche 1 bis 5, **dadurch gekennzeichnet, dass**
die genannten Schnittstellenmittel (7) ein Drehteil umfassen, das mit einem unteren Bereich des Behälters (1, 1') so verbunden ist, dass es gemeinsam mit einer Drehbewegung des Behälters (1, 1') bewegbar ist, wobei das genannte Drehteil in Wirkverbindung, insbesondere über einen Eingriffsmechanismus, mit einem Bauteil für die elektrische Variation durch Drehung steht, bevorzugt eines Potentiometers, sodass das Ausmaß der Drehbewegung des genannten Behälters (1, 1') in ein elektrisches Signal umgewandelt wird.

7. System nach einem der Ansprüche 1 bis 6, **dadurch gekennzeichnet, dass**
die genannten Schnittstellenmittel (7) in Wirkverbindung mit den genannten Steuermitteln (5) stehen, sodass sie als Eingangssignal für mindestens einen der folgenden Vorgänge dienen:
- Auswahl der Art des Abgabezyklus der Substanz in den Behälter (1);
- Auslösen des Beginns des Zubereitungszyklus für ein essbares Produkt;
- Einstellen der Menge des auszugebenden essbaren Produkts über die Aufnahmeanordnung (2);
- Beginn und Ende der Abgabe des essbaren Produkts über die Aufnahmeanordnung (2),
- Auslösen mindestens einer Öffnungsbewegung sowie gegebenenfalls zusätzlich einer Schließbewegung eines Zufuhrkanals für die Portion (8) der essbaren Substanz, sowie eine damit funktionsgerecht verbundene Vorrichtung für die Produktzubereitung (4),
und bevorzugt das Anzeige eines Status an den Benutzer, der mit mindestens einer der genannten auswählbaren Interaktionen verbunden ist.

8. System nach einem der Ansprüche 1 bis 7, **dadurch gekennzeichnet, dass**
die genannten Schnittstellenmittel (7) in Wirkverbindung mit den Steuermitteln (5) vorgesehen und dazu ausgelegt sind, die Auswahl der Art oder der Eigenschaften eines essbaren Produkts und/oder dessen Ausgabe gemäß mindestens einem der folgenden Aspekte zu ermöglichen:
- die Art der Bewegung, einschließlich vertikaler Verschiebung oder Drehung relativ zu einer Referenzachse (X) der Aufnahmeanordnung (2);
- die Bewegungsrichtung, einschließlich beispielsweise einer vertikalen Bewegung nach unten oder oben, die Drehung im Uhrzeigersinn oder gegen den Uhrzeigersinn, und
wobei die genannten Schnittstellenmittel (7) dazu ausgelegt sind, dass sie Eingangssignale zur Regelung der Abgabemenge gemäß mindestens einem der folgenden Aspekte bereitstellen:
- das Ausmaß der Eingriffsbewegung des Behälters (1) auf der genannten Aufnahmeanordnung (2), umfassend mindestens eine erste Position (I), bevorzugt auch eine zweite Position (II) im Haltezustand (B; C);
- die Zeitdauer, während der der Behälter (1) in der Aufnahmeanordnung (2) betriebsbereit gehalten wird, mindestens über ein Ausmaß der Eingriffsbewegung, das einer ersten Position (I) oder einer zweiten Position (II) im Haltezustand (B; C) entspricht.

9. System nach einem der Ansprüche 1 bis 8, **dadurch gekennzeichnet, dass**
die genannte Vorrichtung (3) Ausgabemittel (27) aufweist, die bevorzugt der genannten Aufnahmeanordnung (2) zugeordnet und dazu ausgelegt sind, dem Benutzer eine Anzeige einer durch die Drehung des Behälters (1) um seine eigene Achse bewirkten Veränderung bereitzustellen, wobei die genannten Ausgabemittel (27) beispielsweise als eine Vielzahl von Lichtpunkten ausgebildet sind, die in einer ähnlichen Anordnung vorgesehen und funktionsmäßig mit der Drehbewegung des Behälters (1) um seine eigene Achse auf der Aufnahmeanordnung (2) verbunden sind.

10. Verfahren zum Betrieb eines Systems nach einem der vorangehenden Ansprüche 1 bis 9, wobei das genannte Verfahren eine Auswahlinteraktion durch einen Benutzer der Vorrichtung (3) umfasst, um deren Betriebszyklus zu steuern,
**dadurch gekennzeichnet, dass**
die genannte Auswahlinteraktion die Betätigung mindestens einer Drehbewegung des Behälters (1) um seine eigene Achse umfasst, wenn dieser funktionsgerecht auf der Aufnahmeanordnung (2) der Vorrichtung (3) angeordnet ist, wobei die genannte Betätigung vor Beginn jedes Betriebszyklus durchgeführt wird und die Durchführung des Betriebszyklus keine Betätigung einer weiteren Benutzerschnittstelle der Vorrichtung (3) durch den Benutzer erfordert.

11. Verfahren nach Anspruch 10, **dadurch gekennzeichnet, dass**
die genannte Auswahlinteraktion von Steuermitteln (5) erfasst wird, um die Auswahl mindestens eines der folgenden Aspekte zu bestimmen:
- die Betriebsart der Vorrichtung (3), wie beispielsweise die Zubereitung eines essbaren Produkts oder die Zirkulation einer Flüssigkeit zur Reinigung des Zubereitungskreislaufs des Produkts,
- die Art des essbaren Produkts, wie beispielsweise Kaffee, Wasser, Milch oder eines anderen Produkts,
und/oder
eine Menge, die mit der jeweiligen Abgabe des essbaren Produkts in einen Behälter (1) verbunden ist, einschließlich mindestens eines der folgenden Aspekte:
- die relative Menge im Verhältnis zu mindestens einem Mindestwert und/oder Höchstwert;
- die Dauer der Produktabgabe, und
- die Menge der Produktabgabe,
und
wobei die genannte Drehbewegung des Behälters (1) auf der Aufnahmeanordnung (2) durch die Steuermittel (5) mit mindestens einem der folgenden Aspekte verbunden ist: Beginn, Ende, Dauer und Menge der Abgabe des essbaren Produkts.

12. Verfahren nach den Ansprüchen 10 oder 11, **dadurch gekennzeichnet, dass**
die genannte Interaktion die folgenden Schritte umfasst:
- das Abstellen eines Behälters (1) in einer Ausgangsposition auf einer Aufnahmeanordnung (2);
- das Bewegen des Behälters (1) in einer ersten Bewegung, beispielsweise einer Drehbewegung, in eine erste Richtung, beispielsweise im Uhrzeigersinn, in eine betriebsbereite Halteposition auf der genannten Aufnahmeanordnung (2),
- das zusätzliche Bewegen des Behälters (1) in der ersten Richtung und in einem vorgegebenen Ausmaß zwischen der ersten und der zweiten Halteposition, wobei dies einem maximalen Ausmaß der Bewegung des Behälters (1) über die erste Halteposition hinaus entspricht;
- das Bereitstellen eines ersten Betriebseingangssignals an die Steuermittel (5), nachdem sich der Behälter (1) in einer vorgegebenen ersten Betriebsposition befindet, die der Position entspricht, in der der Behälter (1) von dem Benutzer innerhalb des durch die genannte erste und zweite Halteposition definierten Bewegungsintervalls bewegt wurde, und zwar während einer im Voraus festgelegten Zeitdauer;
- das Einleiten einer Strömungszirkulation, beispielsweise eines Zubereitungszyklus eines Getränks, entsprechend der genannten ersten Betriebsposition, insbesondere unter Einbeziehung eines Betriebswerts, der mit dem Ausmaß der Bewegung entlang der ersten Richtung zwischen der genannten ersten Halteposition und der genannten ersten Betriebsposition verbunden ist;
- das Ausgeben eines ersten essbaren Produkts, beispielsweise die Ausgabe eines Getränks, das durch die Extraktion eines Teils (9) einer essbaren Substanz entsteht, über die Mittel für die Getränkeausgabe auf der Aufnahmeanordnung (2) in den Behälter (1) durch dessen Bodenbereich hindurch,
- optional, das zusätzliche Bewegen des Behälters (1) während der genannten Abgabe der essbaren Substanz, wodurch ein zweites Betriebseingangssignals bereitgestellt wird, beispielsweise durch Vergrößern und/oder Verringern des Ausmaßes der Bewegung relativ zur ersten Betriebsposition, wobei das zweite Betriebseingangssignal der Differenz eines Betriebswerts, beispielsweise eines Abgabevolumens, gegenüber dem Betriebswert entspricht, der dem genannten ersten Betriebseingangssignal zugeordnet ist;
- das Beenden der Abgabe des essbaren Produkts, nachdem mindestens einer der folgenden Schritte erfolgt ist:
- das Erreichen des Betriebswerts, der dem zuletzt an die Steuermittel (5) bereitgestellten genannten ersten oder zweiten Betriebseingangssignal zugeordnet ist;
- das Bewegen des Behälters (1) noch während der Abgabe des essbaren Produkts in die erste Halteposition;
- das Zurückbewegen des Behälters (1) in einer der ersten Richtung entgegengesetzten Richtung in die erste Halteposition und darüber hinaus in die zweite Richtung, wodurch der Behälter (1) aus der Halteposition in der Aufnahmeanordnung (2) gelöst wird;
- das Entfernen des Behälters (1) aus der Aufnahmeanordnung (2).

13. Verfahren nach den Ansprüchen 10 bis 12, **dadurch gekennzeichnet, dass**
die genannte Auswahlinteraktion ferner mindestens einen der folgenden Schritte umfasst:
- das Bewegen des Behälters (1) in einer zweiten Bewegung in die operative Halteposition auf der Aufnahmebahn (2),
- das Beginnen und Beenden der Abgabe einer zweiten essbaren Substanz in den Behälter (1),
und
- das Bewegen des Behälters (1) in einer dritten Bewegung,
- das Durchführen der Entleerung mindestens eines der folgenden Ströme: eines Heizstroms des Behälters (1) und eines Spülstroms zumindest der Aufnahmeanordnung (2),
- das Entfernen des Behälters (1) aus der Aufnahmeanordnung (2).

14. Verfahren nach den Ansprüchen 10 bis 13, **dadurch gekennzeichnet, dass**
die genannte Auswahlinteraktion ferner umfasst:
- das Bewegen des Behälters (1) in einer zweiten Bewegung in die operative Halteposition auf der Aufnahmeanordnung (2), und
- das Beginnen und Beenden der Abgabe eines zweiten essbaren Produkts in den Behälter (1),
- das Entfernen des Behälters (1).

15. Verfahren nach den Ansprüchen 10 bis 14, **dadurch gekennzeichnet, dass**
die genannten Auswahlinteraktion ferner die Auswahl mindestens eines der folgenden Punkte umfasst:
- die Betriebsart der Vorrichtung (3);
- den Betriebsparameter für die Herstellung essbarer Produkte;
- die Art des essbaren Produkts;
- die Menge des auszugebenden essbaren Produkts;
- weitere Ausgabeparameter des auszugebenden essbaren Produkts, wie beispielsweise Ausgabetemperatur und Ausgabedruck;
wobei jeder der verfügbaren Auswahlmöglichkeiten mindestens einem der folgenden Aspekte entspricht: Art der Bewegung, Ausmaß der Bewegung des Behälters (1) auf der Aufnahmeanordnung (2).

16. Verfahren nach den Ansprüchen 10 bis 15, **dadurch gekennzeichnet, dass**
die genannte Auswahlinteraktion ferner mindestens einen der folgenden Schritte umfasst:
- das Versetzen der Vorrichtung (3) von einem "Standby"-Zustand in einen betriebsbereiten Zustand;
- das Betätigen des Öffnens und Schließens eines Zufuhrkanals (8) für eine Portion einer essbaren Substanz;
- das Einbringen einer Portion (9) einer essbaren Substanz durch den genannten Zufuhrkanal (8) für die Portionen;
- das Betätigen des Öffnens und Schließens der Entnahmevorrichtung (4);
wobei mindestens einer der genannten Schritte bevorzugt automatisch ausgelöst wird, nachdem ein Behälter (1) in der Aufnahmeanordnung (2) in Betriebsposition gebracht wurde.

## Revendications

1. Système pour la distribution de produits comestibles et qui inclut :
- un récipient (1) adapté de manière à pouvoir être placé de manière opérationnelle sur un agencement de placement (2), le long d'un axe de référence (X) dudit agencement de placement (2), où le récipient (1) peut recueillir un produit comestible,
- un appareil (3) pour la distribution d'un produit comestible, présentant ledit agencement de placement (2),
ledit agencement de placement (2) présentant un déversement de produit (21) adapté tel qu'il déverse le produit comestible dans le récipient (1) du moment que le récipient (1) soit placé de manière opérationnelle sur l'agencement de placement (2),
ledit appareil (3) comprenant des moyens de contrôle (5) adaptés pour contrôler le fonctionnement de l'appareil (3), y compris les paramètres de fonctionnement, la communication de données et l'affichage d'informations associées aux cycles de fonctionnement de celui-ci,
**caractérisé en ce que**
ledit appareil (3) présente des moyens d'interface (7) adaptés pour capturer au moins un aspect d'un mouvement de rotation du récipient (1) placé de manière opérationnelle sur ledit agencement de placement (2), et fournir une entrée respective auxdits moyens de contrôle (5),
dans lequel lesdits moyens d'interface (7) sont associés de manière opérationnelle audit agencement de placement (2) tel que lesdits moyens d'interface (7) puissent capturer au moins un de plusieurs aspects de mouvement de rotation du récipient (1) autour de lui-même par l'utilisateur, autour d'un axe vertical de celui-ci, placé de manière opérationnelle sur l'agencement de placement (2), incluant au moins la direction et l'extension dudit mouvement de rotation à partir d'une première position (I) jusqu'à au moins une seconde position (II) le long d'au moins un alignement de manipulation, et **en ce que** lesdits moyens d'interface (7) sont adaptés pour fournir une entrée aux moyens de contrôle (5) sur la base de la capture d'un aspect respectif de mouvement de rotation du récipient (1) autour de lui-même et pour la régulation d'au moins un paramètre de fonctionnement respectif de l'appareil (3).

2. Système selon la revendication 1, **caractérisé**
**en ce que** lesdits moyens d'interface (7) sont associés de manière opérationnelle audit agencement de placement (2) de manière à pouvoir capturer au moins un des éléments suivants :
- placement correct du récipient (1) par l'utilisateur sur l'agencement de placement (2), en particulier dans au moins une position de placement (A),
- rétention correcte du récipient (1) par l'utilisateur sur l'agencement de placement (2), dans au moins une position de condition de rétention (B ; C), et
**en ce que** lesdits moyens d'interface (7) sont adaptés de manière à pouvoir fournir au moins deux entrées différentes aux moyens de contrôle (5) sur la base de la capture d'un aspect respectif de mouvement de rotation du récipient (1) autour de lui-même et pour la régulation d'au moins un paramètre de fonctionnement respectif de l'appareil (3), incluant de préférence au moins la régulation d'un cycle de fonctionnement, tel que par exemple le déversement de produit comestible dans le récipient (1).

3. Système selon la revendication 1 ou 2, **caractérisé**
**en ce que** lesdits moyens d'interface (7) sont adaptés de manière à pouvoir capturer au moins un aspect de mouvement de rotation du récipient (1) placé de manière opérationnelle sur l'agencement de placement (2), y compris à l'aide d'un moyen à distance, à l'aide d'un moyen à proximité du récipient (1) ou à l'aide d'un contact direct avec celui-ci, et
**en ce que** lesdits moyens d'interface (7) sont adaptés de manière à pouvoir capturer au moins un des éléments suivants :
- type de mouvement, y compris au moins un mouvement de rotation du récipient (1) autour de lui-même, de préférence également un mouvement vertical du récipient (1) le long de l'axe de référence (X),
- direction de mouvement, y compris au moins une rotation dans le sens des aiguilles d'une montre, de préférence également dans le sens inverse des aiguilles d'une montre, et
- au moins un des éléments suivants : présence opérationnelle et rétention du récipient (1) sur l'agencement de placement (2) ;
- extension de mouvement du mouvement de rotation par le récipient (1) autour de lui-même sur l'agencement de placement (2) entre au moins un des éléments suivants :
- une position de placement (A) et une position de rétention (B ; C) du récipient (1) ;
- une première (I) et une seconde position (II), de préférence une pluralité de positions angulaires relatives du récipient (1) en condition de rétention (B ; C).

4. Système selon les revendications 1 à 3, **caractérisé**
**en ce que** lesdits moyens d'interface (7) sont adaptés de manière à pouvoir être actionnés par le récipient (1) placé de manière opérationnelle sur l'agencement de placement (2) y compris mû conjointement par un mouvement du récipient (1), y compris par moyen d'au moins un des éléments suivants : accouplement de matériaux entre les matériaux en contact direct, accouplement magnétique, accouplement électromagnétique, accouplement mécanique par raccord pressurisé de mâle-femelle, baïonnette, type de vis, ou similaire, tel que au moins un mouvement de rotation du récipient (1) autour de lui-même, de préférence également un mouvement vertical le long d'un axe de référence (X), mène à un mouvement correspondant des moyens d'interface (7).

5. Système selon l'une quelconque des revendications 1 à 4, **caractérisé**
**en ce que** lesdits moyens d'interface (7) sont adaptés de manière à pouvoir être accouplés par le récipient (1) placé de manière opérationnelle sur l'agencement de placement (2), de préférence placé dans une position préalablement définie de manière à pouvoir être retenu de manière opérationnelle sur l'agencement de placement (2), et mû à partir d'au moins une des options suivantes : une première position de placement et une seconde position du récipient (1) où il est retenu de manière opérationnelle sur ledit agencement de placement (2), et peut être désaccouplé au cas où le récipient (1) est mû desdites positions en un mouvement inversé.

6. Système selon l'une quelconque des revendications 1 à 5, **caractérisé**
**en ce que** lesdits moyens d'interface (7) comprennent une pièce de rotation associée à la région de base du récipient (1, 1') de manière à pouvoir être conjointement mû par un mouvement de rotation de celle-ci, selon laquelle ladite pièce de rotation est fournie en liaison fonctionnelle, par exemple à l'aide d'un mécanisme d'accouplement, avec une pièce de variation électrique par rotation de celle-ci, par exemple de type potentiomètre, telle que l'extension du mouvement de rotation dudit récipient (1, 1') soit convertie en un signal électrique.

7. Système selon l'une quelconque des revendications 1 à 6, **caractérisé**
**en ce que** lesdits moyens d'interface (7) sont fournie en liaison opérationnelle avec lesdits moyens de contrôle (5) de manière à fournir une entrée à au moins un des éléments suivants :
- sélection du type de cycle de déversement de substance dans le récipient (1) ;
- actionnement du début du cycle de préparation de produit comestible ;
- régulation de la quantité de produit comestible devant être déversée à travers l'agencement de placement (2) ;
- début et fin du déversement de produit comestible à travers l'agencement de placement (2) ;
- actionnement d'au moins un mouvement d'ouverture, facultativement également d'un mouvement de fermeture d'un passage d'alimentation de portion (8) de substance comestible, et dispositif de préparation de produit (4) associé de manière opérationnelle à celui-ci,
et de préférence l'affichage d'informations à l'utilisateur concernant l'état étant associé à au moins une desdites interactions de sélection.

8. Système selon l'une quelconque des revendications 1 à 7, **caractérisé**
**en ce que** lesdits moyens d'interface (7) sont prévus en liaison fonctionnelle avec les moyens de contrôle (5) et adaptés de manière à permettre la sélection du type ou des caractéristiques de produit comestible et/ou déverser celui-ci, selon au moins l'un des éléments suivants :
- type de mouvement, y compris de translation verticale ou de rotation par rapport à un axe de référence (X) de l'agencement de placement (2) ;
- direction de mouvement, y compris par exemple vertical vers le bas et vertical vers le haut, rotation dans le sens des aiguilles d'une montre ou opposé, et
**en ce que** lesdits moyens d'interface (7) sont adaptés de manière à fournir une entrée pour la régulation de la quantité de déversement en fonction d'au moins un des éléments suivants :
- l'extension du mouvement d'accouplement du récipient (1) sur ledit agencement de placement (2), y compris au moins une première position (I), de préférence également une seconde position (II) en condition de rétention (B ; C) ;
- la période de temps durant laquelle le récipient (1) est accouplé de manière opérationnelle dans la disposition placée (2), au moins dans une extension de mouvement d'accouplement qui correspond à une première position (I) ou à une seconde position (II) en condition de rétention (B ; C).

9. Système selon l'une quelconque des revendications 1 à 8, **caractérisé**
**en ce que** ledit appareil (3) présente des moyens de sortie (27) de préférence associés audit agencement de placement (2) et adaptés de manière à pouvoir afficher à l'utilisateur une indication de variation générée par la rotation du récipient (1) autour de lui-même, lesdits moyens de sortie (27) se trouvant par exemple sous forme d'une pluralité de points lumineux fournis en alignement similaire et associés de manière opérationnelle à l'extension de rotation du récipient (1) autour de lui-même sur l'agencement de placement (2).

10. Procédé pour le fonctionnement d'un système selon l'une quelconque des revendications 1 à 9, ledit procédé incluant une interaction de sélection par un utilisateur de l'appareil (3) afin de réguler un cycle de fonctionnement de celui-ci,
**caractérisé**
**en ce que** ladite interaction de sélection inclut l'actionnement par l'utilisateur d'au moins un mouvement de rotation du récipient (1) autour de lui-même lorsqu'il est placé de manière opérationnelle sur l'agencement de placement (2) de l'appareil (3), ledit actionnement étant exécuté avant le début de chaque cycle de fonctionnement, et la réalisation du cycle de fonctionnement ne requérant pas de la part de l'utilisateur l'actionnement d'autres interfaces d'utilisation de l'appareil (3).

11. Procédé selon la revendication 10, **caractérisé**
**en ce que** ladite interaction de sélection est capturée par des moyens de contrôle (5) de manière à déterminer la sélection d'au moins un des éléments suivants :
- type de fonctionnement de l'appareil (3), tel que par exemple la préparation de produit comestible ou la circulation de fluide pour le nettoyage du circuit de préparation du produit,
- type de produit comestible, tel que par exemple du café, ou de l'eau, ou du lait, ou autre,
et/ou
une quantité associée au déversement respectif de produit comestible dans un récipient (1), incluant au moins un des éléments suivants :
- quantité relative par rapport à au moins une référence minimale et/ou maximale ;
- durée du déversement de produit, et
- volume de déversement de produit,
et
**en ce que** ledit mouvement de rotation du récipient (1) sur l'agencement de placement (2) est associé par les moyens de contrôle (5) à au moins un des éléments suivants : début, arrêt, durée et volume de déversement du produit comestible.

12. Procédé selon les revendications 10 ou 11, **caractérisé**
**en ce que** ladite interaction de sélection comprend les étapes suivantes :
- placer un récipient (1) dans une position de placement initiale sur un agencement de placement (2) ;
- mouvoir le récipient (1) en un premier mouvement, par exemple de rotation, dans une première direction, par exemple dans le sens des aiguilles d'une montre, vers une position de rétention opérationnelle sur ledit agencement de placement (2),
- également mouvoir le récipient (1) dans la première direction et dans une extension donnée comprise entre la première et la seconde position de rétention qui correspond à une extension maximale de mouvement du récipient (1) au-delà de la première position de rétention ;
- fournir une première entrée de fonctionnement aux moyens de contrôle (5) après que le récipient (1) soit à une première position de fonctionnement donnée, correspondant à la position vers laquelle le récipient (1) a été mû par l'utilisateur lors de l'intervalle d'extension de mouvement défini par lesdites première et seconde positions de rétention, durant une période de temps préalablement définie ;
- débuter la circulation de flux, par exemple le cycle de préparation de boisson, en fonction de ladite première position de fonctionnement, incluant en particulier une valeur de fonctionnement liée à l'extension de mouvement le long de la première direction entre ladite première position de rétention et la première position de fonctionnement ;
- exécuter le déversement d'un premier produit comestible, par exemple le déversement d'une boisson résultant de l'extraction d'une portion (9) de substance comestible, par le moyen de déversement de boisson sur l'agencement de placement (2) dans le récipient (1) à travers la base de celui-ci,
- facultativement, également mouvoir le récipient (1) durant ledit déversement de substance comestible et ainsi fournir une seconde entrée de fonctionnement, incluant par exemple augmenter et/ou réduire l'extension de mouvement par rapport à la première position de fonctionnement, où la seconde entrée de fonctionnement correspondent à la différence de valeur de fonctionnement, par exemple le volume de déversement, par rapport à la valeur de fonctionnement associée à ladite première entrée de fonctionnement ;
- mettre fin au déversement de produit comestible après au moins un des cas suivants :
- avoir atteint la valeur de fonctionnement associée à la précédente desdites première et seconde entrées de fonctionnement fournies aux moyens de contrôle (5) ;
- que le récipient (1) soit mû vers la première position de rétention toujours durant le déversement du produit comestible ;
- mouvoir le récipient (1) dans une direction inverse à la première direction, de retour vers la première position de rétention et au-delà de celle-ci, dans la seconde direction, libérant ainsi le récipient (1) de la rétention dans l'agencement de placement (2) ;
- retirer le récipient (1) de l'agencement de placement (2).

13. Procédé selon les revendications 10 à 12, **caractérisé**
**en ce que** ladite interaction de sélection comprend également au moins une des étapes suivantes :
- mouvoir le récipient (1) en un second mouvement en rétention opérationnelle sur l'agencement de placement (2),
- débuter et mettre fin au déversement d'une seconde substance comestible dans le récipient (1),
et
- mouvoir le récipient (1) en un troisième mouvement,
- exécuter le déversement d'au moins un des éléments suivants : un débit de chauffage du récipient (1) et un débit de purge au moins de l'agencement de placement (2),
- retirer le récipient (1) de l'agencement de placement (2).

14. Procédé selon les revendications 10 à 13, **caractérisé**
**en ce que** ladite interaction de sélection inclut également :
- mouvoir le récipient (1) en un second mouvement en rétention opérationnelle sur l'agencement de placement (2), et
- débuter et mettre fin au déversement d'un second produit comestible dans le récipient (1),
- retirer le récipient (1).

15. Procédé selon les revendications 10 à 14, **caractérisé**
**en ce que** ladite interaction de sélection inclut également la sélection d'au moins un des éléments suivants :
- type d'opération de l'appareil (3) ;
- paramètre de fonctionnement de préparation de produit comestible ;
- type de produit comestible ;
- quantité de produit comestible devant être déversée ;
- autre paramètre de déversement de produit comestible devant être déversé, tel que par exemple la température de déversement et la pression de déversement ;
selon lequel à chacune des sélections disponibles correspond au moins un des éléments suivants : type de mouvement, extension de mouvement du récipient (1) sur l'agencement de placement (2).

16. Procédé selon les revendications 10 à 15, **caractérisé**
**en ce que** ladite interaction de sélection inclut également au moins une des étapes suivantes :
- passer l'appareil (3) d'un état de « veille » à un état prêt à fonctionner ;
- actionnement de l'ouverture et de la fermeture d'un passage d'introduction (8) de portion de substance comestible ;
- introduction d'une portion (9) de substance comestible à travers ledit passage d'introduction (8) de portion ;
- actionnement de l'ouverture et de la fermeture du dispositif d'extraction (4) ;
selon lequel au moins une desdites étapes est de préférence automatiquement débutée après le placement d'un récipient (1) en rétention opérationnelle sur l'agencement de placement (2).
